# NEUE EUROPÄISCHE PATENTSCHRIFT

(11) **EP 2 345 831 B2**
(45) Veröffentlichungstag und Bekanntmachung des Hinweises auf die Entscheidung über den Einspruch: **08.07.2020**
(45) Hinweis auf die Patenterteilung: 20.09.2017
(21) Anmeldenummer: 10016220.5
(22) Anmeldetag: 31.12.2010
(51) Int. Cl.: F16K 31/50, F16K 3/314

(54) **Absperrelement**
Blocking element
Elément de blocage

(30) Priorität: 14.01.2010 AT 372010
(43) Veröffentlichungstag der Anmeldung: 20.07.2011
(73) Patentinhaber: E. Hawle Armaturenwerke GmbH, 4840 Vöcklabruck (AT)
(72) Erfinder: Berger, Christian, 4650 Lambach (AT); Mayr, Philipp, 4664 Oberweis (AT)
(74) Vertreter: Puchberger & Partner Patentanwälte

(56) Entgegenhaltungen:
- EP-B1- 1 516 138
- US-A- 3 662 778
- US-A- 3 957 245
- US-A- 4 138 091

## Beschreibung

Die Erfindung betrifft ein Absperrelement mit einem Grundkörper und einer Öffnung zur Aufnahme einer mit einem Gewindeeinsatz in Eingriff stehenden Schieberspindel.

Absperrarmaturen für Rohrleitungen verfügen meist über quer zur Strömungsrichtung im Schiebergehäuse angeordnete Absperrelemente, die in ihrem Inneren eine Öffnung zur Aufnahme einer Schieberspindel aufweisen, und mit dieser über einen Gewindeeingriff verbunden sind. Bei Betätigung der Schieberspindel bewegt sich das Absperrelement in Spindellängsrichtung aus einer Offenstellung in eine Schließstellung. An ihrem Umfang verfügen derartige Absperrelemente über elastische Dichtabschnitte, die in der Schließstellung gegen die Innenflächen der Rohrleitung pressen und damit eine Absperrung der Rohrleitung erzielen, und Gleitkörper bzw. Gleitaufsätze zur Führung des Absperrelements in einer entsprechend ausgeführten Schieberkammer.

Derartige Absperrelemente sind beispielsweise in den Druckschriften EP 0 171 693 A2 und US 4 629 160 beschrieben. Der Grundkörper dieser Absperrelemente, auf den die Dichtabschnitte aufgebracht werden, und der die Öffnung zur Aufnahme der Schieberspindel aufweist, wird im Allgemeinen aus einem metallischen Werkstoff, beispielsweise MS oder Sphäroguss, und in Ausnahmefällen aus Kunststoff durch ein Spritzgussverfahren hergestellt. Im Gegensatz dazu werden die oben erwähnten Gleitkörper bzw. Gleitaufsätze im Allgemeinen aus Kunststoff hergestellt.

Von besonderer Bedeutung für die Stabilität und Dichtwirkung des Absperrelements ist die Verbindung mit der Schieberspindel, die im Allgemeinen durch einen Gewindeeinsatz aus einem harten Material, bevorzugt Metall oder Keramik, erfolgt, der ein Innengewinde aufweist, das mit dem Außengewinde der Schieberspindel in Eingriff steht. Das Dokument EP 1 516 138 B1 zeigt verschiedene Möglichkeiten, wie der Gewindeeinsatz mit dem Absperrelement verbunden werden kann. Insbesondere kann der Gewindeeinsatz über eine lösbare Kupplungsanordnung mit dem Absperrelement verbunden sein, und das Absperrelement aus Stabilitätsgründen zumindest teilweise umfassen.

Eine derartige Kupplung mittels lösbarer Verbindungselemente hat sich jedoch als nachteilig im Bezug auf die Haltbarkeit der Verbindung herausgestellt. Im Sinne einer erhöhten Robustheit und längeren Haltbarkeit des Absperrelements wäre es vorteilhaft, den Gewindeeinsatz einstückig mit dem Absperrelement auszuführen. Dazu wäre es jedoch erforderlich, das gesamte Absperrelement, oder zumindest dessen Grundkörper, aus dem selben Material wie den Gewindeeinsatz, also bevorzugt Metall oder Keramik, herzustellen. Dies ist aus Kostengründen nicht erwünscht. Wenn das Absperrelement aus weicheren Materialien wie Kunststoff geformt wird, hätte das Gewinde für die Schieberspindel nicht die erforderliche Festigkeit.

Weitere Absperrelemente sind beispielsweise aus der US 4 138 091 A und US 3 957 245 A bekannt. Aus der oben angeführten US 4 138 091 A und der US 3 957 245 A sind Absperrelemente mit Grundkörpern und Öffnungen zur Aufnahme von mit einem Gewindeeinsatz in Eingriff stehenden Schieberspindeln bekannt, wobei die Grundkörper formschlüssig mit den Gewindeeinsätzen verbunden sind.

Es ist deshalb Aufgabe der Erfindung, ein Absperrelement vorzusehen, dass einerseits möglichst kostengünstig hergestellt werden kann, und andererseits eine möglichst robuste und langlebige Kopplung des Absperrelements mit dem Gewindeeinsatz ermöglicht. Gleichzeitig soll die Verbindung des Gewindeeinsatzes mit dem Absperrelement platzsparend erfolgen, um eine einfache Montage der Vorrichtung zu ermöglichen. Zusätzliche Verbindungselemente sollten tunlichst vermieden werden.

Diese Aufgabe der Erfindung wird durch die im kennzeichnenden Teil des Anspruchs 1 genannten Merkmale erreicht. Der Gewindeeinsatz ist formschlüssig mit dem Grundkörper des Absperrelements verbunden und insbesondere in diesen eingegossen. Dadurch wird eine kostengünstige Herstellung der Vorrichtung erreicht. Zusätzliche Kupplungselemente, wie Flansche oder Schrauben, entfallen. Der Gewindeeinsatz kann aus einem metallischen Werkstoff oder aus Keramik gefertigt werden, um einen guten Eingriff in das Außengewinde der Schieberspindel zu ermöglichen. Gleichzeitig kann der Grundkörper kostengünstig aus einem temperaturbeständigen Kunststoff gegossen werden. Durch die, in den Unteransprüchen beschriebenen, Versteifungs- und Stabilisierungsmittel wird einer Verdrehung oder Lockerung des Gewindeeinsatzes zuverlässig entgegengewirkt. Die umfangsseitig angeordneten Gleitkörper bzw. Gleitaufsätze aus Kunststoff können direkt mit dem Grundkörper mitgegossen werden, wodurch die Herstellung weiter vereinfacht wird.
Erfindungsgemäß ist ebenfalls vorgesehen, dass der Grundkörper mehrteilig ausgeführt sein kann, wobei der Gewindeeinsatz beim Zusammenbau des Grundkörpers in diesen eingelegt wird.

Zur Stabilisierung des Gewindeeinsatzes ist erfindungsgemäß vorgesehen, dass der Grundkörper einen, die Position des Gewindeeinsatzes stabilisierenden Sattel aufweist. Dieser Sattel kann ein Teil des Grundkörpers, oder mit diesem verbunden sein. Der Gewindeeinsatz verfügt über Stabilisierungselemente, die dessen Position im Sattel fixieren. Es ist insbesondere vorgesehen, dass der Sattel in Form einer den Umfang des Grundkörpers teilweise umfassenden Schale ausgebildet ist. Dadurch wird eine gute Weiterleitung der auf den Sattel wirkenden Kräfte erreicht. Insbesondere ist vorgesehen, dass die Breite des Sattels größer oder gleich der Breite des Grundkörpers ist. Dadurch wird einerseits die Kopplung des Gewindeeinsatzes mit dem Grundkörper verbessert, und andererseits verhindert, dass die am Umfang des Grundkörpers befindlichen Dichtungen nicht nach oben verschoben werden können. Es ist aber auch möglich, den Sattel gleich groß oder schmäler als den Grundkörper auszuführen.

Wie oben erwähnt, verfügt der Gewindeeinsatz über verschiedene Stabilisierungselemente, um die auf den Gewindeeinsatz wirkenden Kräfte an den Sattel- bzw. an den Grundkörper des Absperrelements weiterzuleiten. Es ist erfindungsgemäß vorgesehen, dass der Gewindeeinsatz über zumindest eine stabilisierende Druckplatte verfügt. Diese soll den Anpressdruck von der Schieberspindel über den Gewindeeinsatz auf den Grundkörper weiterleiten. Weiters kann der Gewindeeinsatz über mindestens eine, den Gewindeeinsatz gegen Verdrehung sichernde Transversalrippe aufweisen. Derartige Transversalrippen können insbesondere auf den Druckplatten, beispielsweise an deren Oberseite und/oder deren Unterseite, angebracht werden. Diese sollen verhindern, dass der Gewindeeinsatz durch Verdrehung bzw. Verwindung aus dem Grundkörper gerissen wird.

Als zusätzliche Unterstützung können am Gewindeeinsatz Umfangsrippen vorgesehen sein, die eine feste Verbindung des Gewindeeinsatzes mit dem Grundkörper ermöglichen und insbesondere dem Gewindeeinsatz gegen Herausziehen aus dem Grundkörper bzw. Hineindrücken in den Grundkörper schützen.

Es ist ein weiteres Merkmal der Erfindung, dass der Gewindeeinsatz eine Öffnung aufweist, in der sich ein Innengewinde befindet, welches mit einem Außengewinde der Schieberspindel in Eingriff steht. Zur Positionierung beim Spritzen kann am äußeren Umfang des Gewindeeinsatzes ein Gewindebund vorgesehen sein. Ein derartiger Gewindebund dient auch als weiteres Stabilisierungsmittel gegen ein Hineindrücken oder Herausziehen des Gewindeeinsatzes in bzw. aus dem Grundkörper.

Bezüglich der Ausführung des Grundkörpers umfasst die vorliegende Erfindung insbesondere eine Ausführungsform, bei der an gegenüberliegenden Stützflächen des Grundkörpers Dichtelemente befestigt sind, die zumindest eine umlaufende Randwulst aufweisen können. Zur Befestigung dieser Dichtelemente können Stützscheiben vorgesehen sein, die durch Befestigungsmittel miteinander fixiert werden und dadurch die Dichtelemente am Grundkörper befestigen. Diese Stützscheiben können insbesondere in Form von Stützblechen ausgeführt sein. Die Dichtelemente können auch direkt am Grundkörper angebracht, beispielsweise geklebt, geklemmt, oder aufvulkanisiert sein.

Zu diesem Zweck kann insbesondere vorgesehen sein, dass der Grundkörper, die Dichtelemente und/oder die Stützscheiben korrespondierende Ausnehmungen zur Aufnahme dieser Befestigungsmittel aufweisen. Weiters kann der Grundkörper über Führungsfortsätze in Form von Laschen, Federn oder dergleichen zur verdrehsicheren Lagerung des Absperrelements verfügen. Diese Führungsfortsätze können am äußeren Umfang des Grundkörpers und/oder im Bereich des Sattels oder im Bereich des Gewindeeinsatzes vorgesehen sein. Diese Führungsfortsätze können durch korrespondierende Ausnehmungen in der Schieberkammer eines Absperrschiebers ergänzt werden, wodurch die Lage des Absperrelements während des Öffnens und Schließens des Strömungskanals definiert ist.

Erfindungsgemäß ist insbesondere vorgesehen, dass der Gewindeeinsatz aus Metall oder einem keramischen Werkstoff besteht, und dass der Grundkörper aus Kunststoff gefertigt ist. Die erwähnten Dichtelemente können aus Elastomeren, Kunststoff, oder aus hochtemperaturbeständigen und/oder gegen aggressive Medien beständigen Materialien bestehen.

Weitere erfindungsgemäße Merkmale können den Unteransprüchen, der nachfolgenden Beschreibung oder den Zeichnungen entnommen werden.

Im Folgenden wird ein nicht einschränkendes Ausführungsbeispiel einer erfindungsgemäßen Vorrichtung anhand der Figuren 1 bis 6 beschrieben.

Es zeigen:
Fig. 1 einen Querschnitt durch eine Absperrarmatur mit einem erfindungsgemäßen Absperrelement;
Fig. 2 eine dreidimensionale Darstellung des Grundkörpers und des Gewindeeinsatzes eines erfindungsgemäßen Absperrelements;
Fig. 3 eine dreidimensionale Darstellung eines erfindungsgemäßen Gewindeeinsatzes;
Fig. 4 einen teilweisen Querschnitt des erfindungsgemäßen Absperrelements aus Figur 1 entlang der Schnittlinie IV-IV aus Fig. 6;
Fig. 5 einen Querschnitt des erfindungsgemäßen Absperrelements aus Fig. 2 entlang der Schnittlinie V-V aus Fig. 4;
sowie Figur 6 einen Querschnitt des erfindungsgemäßen Absperrelements aus Figur 1 entlang der Schnittlinie VI-VI aus Fig. 4.

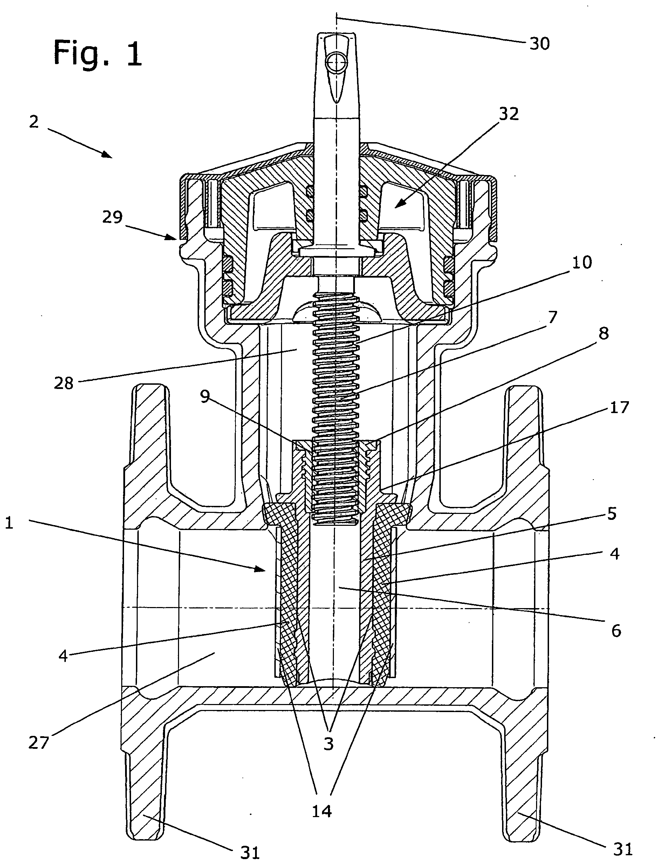

Fig. 1 zeigt einen Querschnitt durch eine Absperrarmatur 2 mit einem erfindungsgemäßen Absperrelement 1 in Schließstellung. Die Absperrarmatur 2 umfasst einen Strömungskanal 27, eine Schiebekammer 28 und einen Gehäusefortsatz 29. Die Schieberspindel 7 ist im Gehäusefortsatz 29 mittels der Spindellagerung 32 gelagert und mit dem erfindungsgemäßen Absperrelement 1 drehverbunden. Dazu verfügt die Schieberspindel über ein Außengewinde 10 und das Absperrelement 1 über einen Gewindeeinsatz 8, der ein Innengewinde 9 aufweist. Bei Betätigung der Schieberspindel 7 bewegt sich das Absperrelement 1 entlang der Längsachse 30, wobei das Absperrelement 1 die Schieberspindel 7 in einer Öffnung 6 aufnimmt. Das Absperrelement 1 umfasst einen Grundkörper 5, an dessen Stützflächen Dichtelemente 4 angeordnet sind, die durch die Stützbleche 14 am Grundkörper 5 befestigt sind. Weiters umfasst die Absperrarmatur 2 die Endflansche 31 zur Befestigung der zu- und abgehenden Rohrleitungen, wobei andere Ausführungsformen der Erfindung selbstverständlich auch über andere Anschlussformen verfügen können.

Das erfindungsgemäße Absperrelement 1 ist nicht auf die Verwendung in der gezeigten Absperrarmatur beschränkt, sondern kann auch in anders aufgebauten Absperrarmaturen, die über eine Schieberspindel betätigt werden, verwendet werden.

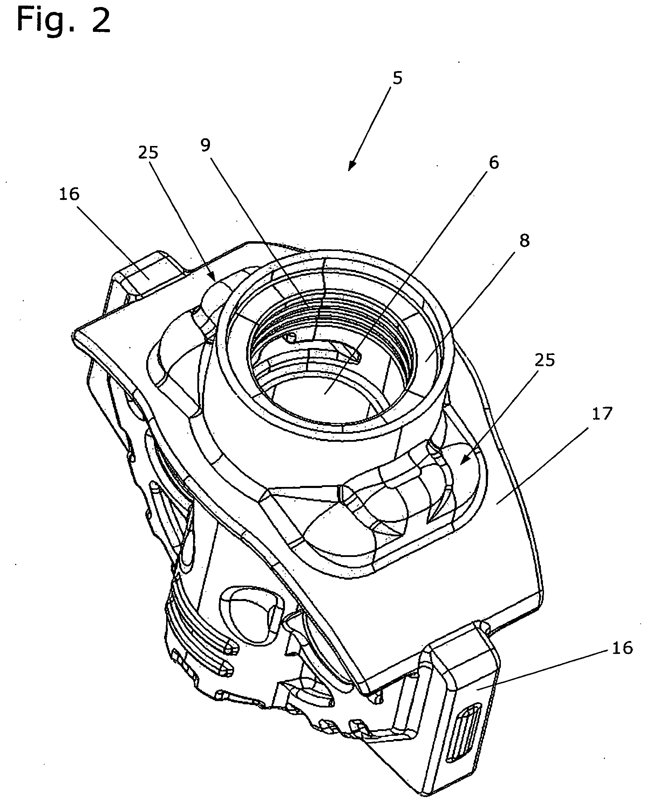

Figur 2 zeigt eine dreidimensionale Darstellung des Grundkörpers 5 und des Gewindeeinsatzes 8 des Absperrelements 1. Der Grundkörper 5 verfügt über eine Öffnung 6 zur Aufnahme der Schieberspindel 7. In dieser Öffnung befindet sich der Gewindeeinsatz 8, der über ein Innengewinde 9 verfügt. In dem dargestellten Zustand ist der Grundkörper 5 praktisch untrennbar mit dem Gewindeeinsatz 8 verbunden. Dies wird bei der Herstellung durch Einbringung des, aus einem metallischen Material oder Keramik bestehenden Gewindeeinsatzes 8 in die Spritzgussform des, aus Kunststoff bestehenden Grundkörpers 5 erreicht. Der Gewindeeinsatz 8 könnte nur unter Zerstörung des Grundkörpers 5 von diesem getrennt werden.

Der Grundkörper 5 verfügt weiters über die Führungsfortsätze 16, die zur Stabilisierung des Absperrelements in Führungsnuten der Schieberkammer 28 eingreifen.

Von besonderer Bedeutung für die erfindungsgemäße Funktion der Vorrichtung ist die Ausbildung des Sattels 17, der ein Teil des Grundkörpers 5 ist. Der Gewindeeinsatz 8 ist bei Betätigung der Schieberspindel einer starken Beanspruchung unterworfen, da ein erheblicher Anpressdruck aufgewendet werden muss, um den Strömungskanal 27 zuverlässig abzudichten. Es ist erfindungsgemäß vorgesehen, den Gewindeeinsatz 8 formschlüssig mit dem Grundkörper 5 zu verbinden, wobei diese Verbindung insbesondere beim Spritzgießen des Grundkörpers 5 erfolgt. Aufgrund der genannten starken Beanspruchung des Gewindeeinsatzes 8 kann es jedoch vorkommen, dass sich der Gewindeeinsatz 8 vom Grundkörper 5 trotz der formschlüssigen Verbindung löst, oder diesen im Bereich der Öffnung 6 verwindet. Aus diesem Grund ist es erfindungsgemäß vorgesehen, dass der Grundkörper 5 im Bereich des Gewindeeinsatzes 8 einen die Position des Gewindeeinsatzes 8 stabilisierenden Sattel 17 aufweist. Dieser Sattel 17 kann in Form einer, den Umfang des Grundkörpers 5 teilweise umfassenden, Schale ausgebildet sein. Durch diesen Sattel 17 ist es möglich, den Gewindeeinsatz 8 durch zusätzliche, ausgedehnte Stabilisierungselemente 25 am Grundkörper 5 zu fixieren.

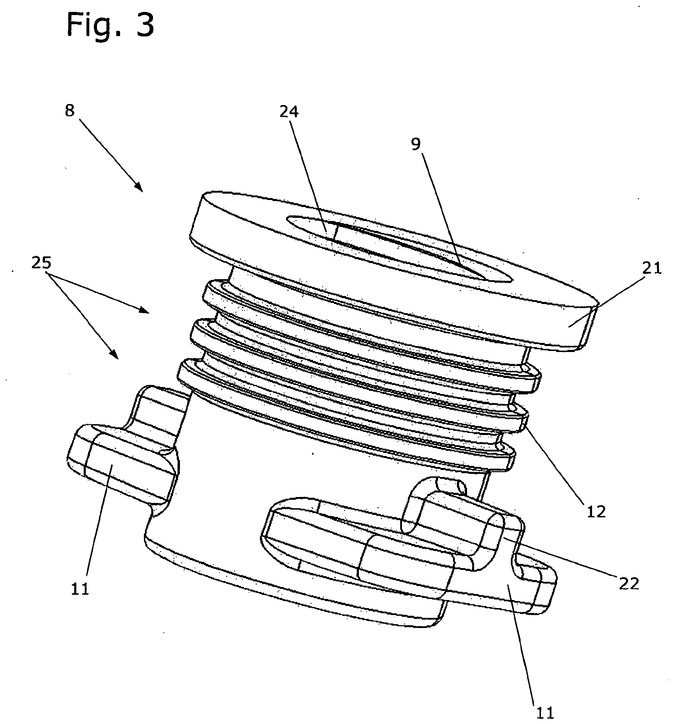

Die Stabilisierungselemente 25 sind in Figur 3 detailliert ersichtlich. Figur 3 zeigt eine dreidimensionale Darstellung des Gewindeeinsatzes 8. Dieser verfügt über eine Öffnung 24 mit einem darin befindlichen Innengewinde 9. Zur Stabilisierung des Gewindes verfügt der Gewindeeinsatz 8 an seinem äußeren Umfang über einen Gewindebund 21. Mehrere Stabilisierungselemente 25 dienen zur Fixierung des Gewindeeinsatzes 8 im Sattel 17 des Grundkörpers 5. Die Umfangsrippen 12 sollen insbesondere ein Herausziehen in Richtung der Längsachse 30 des Gewindeeinsatzes 8 aus dem Grundkörper 5, oder ein Hineindrücken des Gewindeeinsatzes 8 in den Grundkörper 5, vermeiden. Weiters ist eine Druckplatte 11 vorgesehen, um eine homogene Verteilung des, durch die Betätigung der Schieberspindel 7 ausgeübten, Anpressdrucks auf das Absperrelement 1 zu erreichen. Die Druckplatte 11 wirkt auch einer Verdrehung des Gewindeeinsatzes 8 im Sattel 17 entgegen. Zusätzlich sind zu diesem Zweck auf der Druckplatte 11 hervorstehende Transversalrippen 22 vorgesehen.

Durch die Kombination dieser verschiedenen Stabilisierungselemente und die umfassende Bedeckung des Gewindeeinsatzes 8 durch den Sattel 17 wird eine hermetische Verbindung des Gewindeeinsatzes 8 mit dem Grundkörper 5 erreicht, wie sie sonst nur durch eine einstückige Ausführung des Grundkörpers 5 mit dem Gewindeeinsatz 8 möglich wäre.

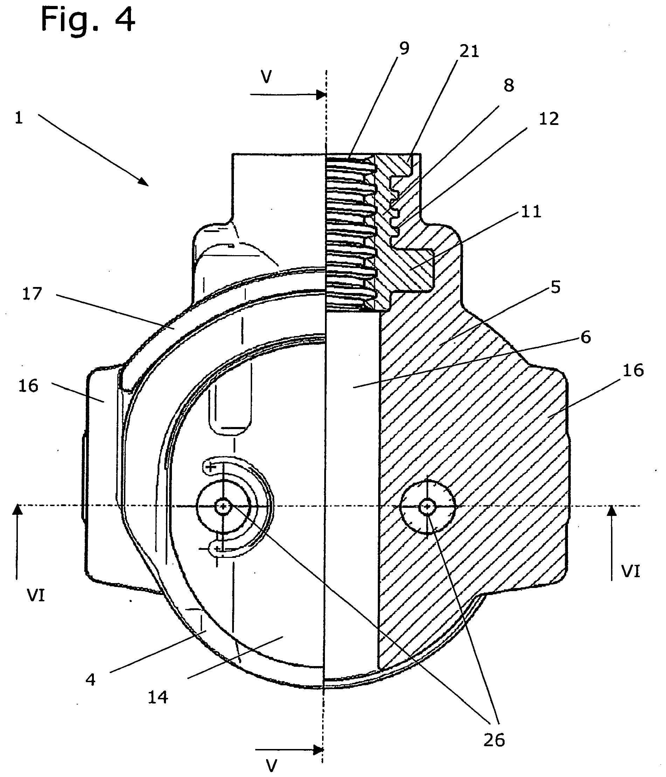

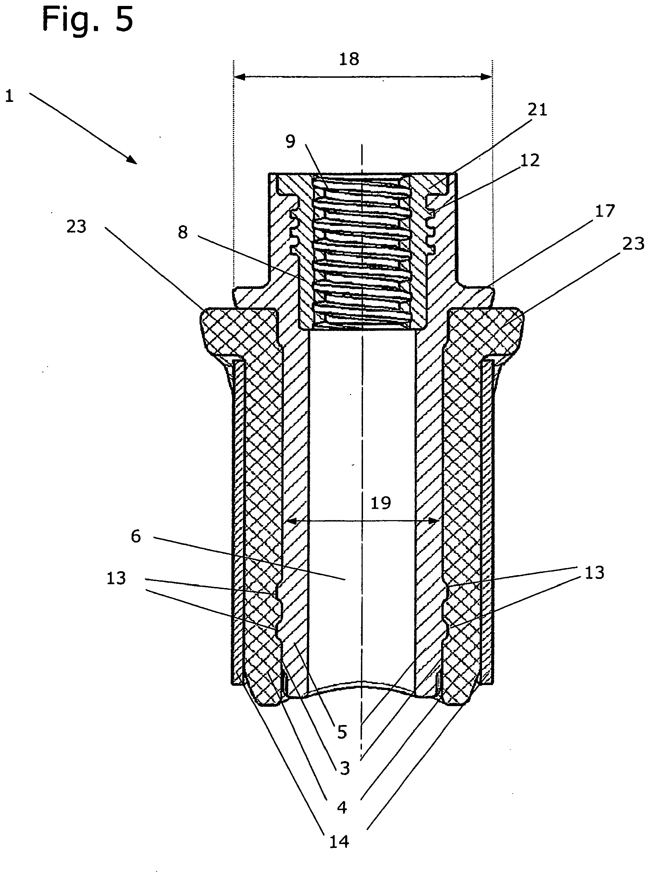

Die Figuren 4 bis 6 zeigen verschiedene Querschnitte durch das erfindungsgemäße Absperrelement aus Figur 1. Das Absperrelement 1 umfasst den Grundkörper 5, den Gewindeeinsatz 8, die Dichtelemente 4 und die Stützbleche 14. Der Grundkörper 5 bildet im Bereich des Gewindeeinsatzes 8 einen Sattel 17 aus. Dieser Sattel 17 hat die Form einer, den Umfang des Grundkörpers 5 teilweise umfassenden Schale. Insbesondere weist der Sattel 17 eine Breite 18 auf, die größer als die Breite 19 des Grundkörpers 5 ist, wie in Figur 5 gezeigt ist. Der Gewindeeinsatz 8 umfasst zur Stabilisierung des Innengewindes 9 einen Gewindebund 21. Weiters sind die Umfangsrippen 12 und die Druckplatte 11 des Gewindeeinsatzes 8 ersichtlich. Der Grundkörper 5 formt an seinem Umfang die Führungsfortsätze 16, die zur Führung des Absperrelements 1 in der Schieberkammer 28 dienen. Zur Abdichtung des Strömungskanals 27 umfasst das Absperrelement 1 die Dichtelemente 4, die an den entgegengesetzten Stützflächen 3 des Grundkörpers 5 angebracht sind. Diese Dichtelemente 4 werden im vorliegenden Ausführungsbeispiel durch die Stützbleche 14 am Grundkörper 5 befestigt. Zu diesem Zweck sind die Befestigungsmittel 26 vorgesehen. Weiters verfügt der Grundkörper 5 über die Versteifungsrippen 13, die ebenfalls eine Fixierung der Dichtelemente 4 ermöglichen. An ihrem äußeren Umfang verfügen die Dichtelemente 4 über den Randwulst 23, der zur Verbesserung des Dichtverhaltens des Absperrelements dient.

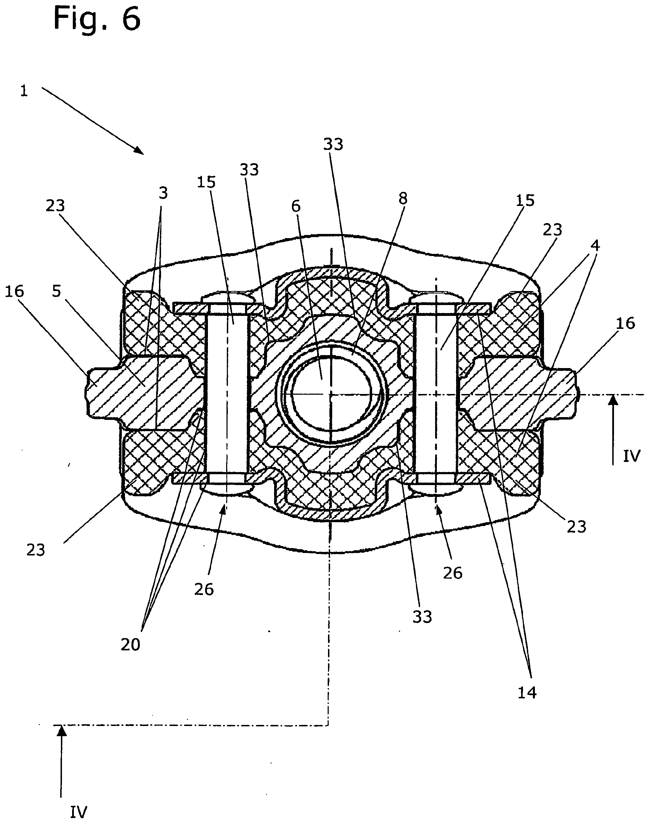

Figur 6 zeigt einen Schnitt durch das Absperrelement 1 entlang der Linie VI-VI in Figur 4. Dabei sind die Befestigungsmittel 26 gezeigt. Diese sind in der vorliegenden Ausführungsform durch die Nieten 15 gebildet, die durch korrespondierende Ausnehmungen 20 im Grundkörper 5, den Dichtelementen 4 und den Stützblechen 14 geführt werden. Durch Zusammenpressen der Nieten 15 wird die Lage der Dichtelemente 4 am Grundkörper 5 fixiert. Eine Vielzahl an Versteifungsrippen 33, die in entsprechende Ausnehmungen der Dichtelemente 4 greifen, dient ebenfalls zur Fixierung der Dichtelemente 4.

Das erfindungsgemäße Absperrelement beschränkt sich selbstverständlich nicht auf die gezeigte Ausführungsform. Insbesondere sind auch Absperrelemente ein Teil der Erfindung, bei denen der Gewindeeinsatz 8 und der Grundkörper 5 einstückig ausgeführt sind.

### Bezugszeichenliste

- 1: Absperrelement
- 2: Absperrarmatur
- 3: Stützflächen
- 4: Dichtelemente
- 5: Grundkörper
- 6: Öffnung
- 7: Schieberspindel
- 8: Gewindeeinsatz
- 9: Innengewinde
- 10: Außengewinde
- 11: Druckplatte
- 12: Umfangsrippen
- 13: Versteifungsrippen
- 14: Stützbleche
- 15: Nieten
- 16: Führungsfortsätze
- 17: Sattel
- 18: Breite des Sattels
- 19: Breite des Grundkörpers
- 20: Ausnehmungen zur Befestigung der Stützbleche
- 21: Gewindebund
- 22: Transversalrippen
- 23: Randwulst
- 24: Öffnung des Gewindeeinsatzes
- 25: Stabilisierungselemente
- 26: Befestigungsmittel
- 27: Strömungskanal
- 28: Schieberkammer
- 29: Gehäusefortsatz
- 30: Längsachse
- 31: Endflansche
- 32: Spindellagerung

## Patentansprüche

1. Absperrelement (1) mit einem Grundkörper (5) und einer Öffnung (6) zur Aufnahme einer mit einem Gewindeeinsatz (8) in Eingriff stehenden Schieberspindel (7), wobei der Grundkörper (5) formschlüssig mit dem Gewindeeinsatz (8) verbunden ist, wobei der Grundkörper (5) einen die Position des Gewindeeinsatzes (8) stabilisierenden Sattel aufweist, wobei der Sattel (17) in Form einer den Umfang des Grundkörpers (5) teilweise umfassenden Schale ausgebildet ist, wobei die Breite (18) des Sattels (17) größer oder gleich der Breite (19) des Grundkörpers (5) ist,
wobei der Gewindeeinsatz (8) in den Grundkörper (5) eingegossen ist, oder wobei der Grundkörper (5) mehrteilig ausgeführt ist und der Gewindeeinsatz (8) in den Grundkörper (5) eingelegt wird,
**dadurch gekennzeichnet, dass**
der Gewindeeinsatz (8) im Sattel (17) des Grundkörpers (5) durch Stabilisierungselemente (25) fixiert ist.

2. Absperrelement nach Anspruch 1, **dadurch gekennzeichnet, dass** der Gewindeeinsatz (8) über stabilisierende, einer Verdrehung und/oder Lockerung des Gewindeeinsatzes (8) entgegenwirkende und eine feste Verbindung des Gewindeeinsatzes (8) mit dem Grundkörper (5) ermöglichende, Stabilisierungselemente aufweist.

3. Absperrelement nach einem der Ansprüche 1 oder 2, **dadurch gekennzeichnet, dass** der Gewindeeinsatz (8) über mindestens eine stabilisierende Druckplatte (11) verfügt.

4. Absperrelement nach einem der Ansprüche 1 bis 3, **dadurch gekennzeichnet, dass** der Gewindeeinsatz (8) mindestens eine, den Gewindeeinsatz (8) gegen Verdrehung sichernde Transversalrippe (22) aufweist.

5. Absperrelement nach einem der Ansprüche 1 bis 4, **dadurch gekennzeichnet, dass** der Gewindeeinsatz (8) über Umfangsrippen (12) zur festen Verbindung mit dem Grundkörper (5) verfügt.

6. Absperrelement nach einem der Ansprüche 1 bis 5, **dadurch gekennzeichnet, dass** der Gewindeeinsatz (8) in einer Öffnung (24) ein Innengewinde (9) aufweist, das mit einem Außengewinde (10) der Schieberspindel (7) in Eingriff steht.

7. Absperrelement nach Anspruch 6, **dadurch gekennzeichnet, dass** der Gewindeeinsatz (8) über einen Gewindebund (21) verfügt.

8. Absperrelement nach einem der Ansprüche 1 bis 7, **dadurch gekennzeichnet, dass** der Grundkörper (5) über Versteifungsrippen (13) verfügt.

9. Absperrelement nach einem der Ansprüche 1 bis 8, **dadurch gekennzeichnet, dass** an gegenüberliegenden Stützflächen (3) des Grundkörpers (5) Dichtelemente (4) befestigt sind.

10. Absperrelement nach Anspruch 9, **dadurch gekennzeichnet, dass** die Dichtelemente (4) mindestens eine umlaufende Randwulst (23) aufweisen.

11. Absperrelement nach Anspruch 9 oder 10, **dadurch gekennzeichnet, dass** Stützscheiben oder Stützbleche (14) zur Befestigung der Dichtelemente (4) am Grundkörper (5) vorgesehen sind.

12. Absperrelement nach Anspruch 11, **dadurch gekennzeichnet, dass** an den Stützscheiben oder Stützblechen (14) die Dichtelemente (4) am Grundkörper (5) fixierende Befestigungsmittel (26) vorgesehen sind, die beispielsweise als Nieten (15), Schrauben, Bolzen oder dergleichen ausgeführt sind.

13. Absperrelement nach Anspruch 12, **dadurch gekennzeichnet, dass** der Grundkörper (5), die Dichtelemente (4) und/oder die Stützscheiben oder Stützbleche (14) korrespondierende Ausnehmungen (20) zur Aufnahme der Befestigungsmittel (26) aufweisen.

14. Absperrelement nach einem der Ansprüche 1 bis 13, **dadurch gekennzeichnet, dass** der Grundkörper (5) über Führungsfortsätze (16) in Form von Laschen, Federn oder dergleichen zur verdrehsicheren Lagerung des Absperrelements (1) verfügt.

15. Absperrelement nach einem der Ansprüche 1 bis 14, **dadurch gekennzeichnet, dass** der Gewindeeinsatz (8) einstückig mit dem Grundkörper (5) ausgeführt ist.

16. Absperrelement nach einem der vorhergehenden Ansprüche, **dadurch gekennzeichnet, dass** der Gewindeeinsatz (8) aus Metall oder einem keramischen Werkstoff, der Grundkörper (5) aus Kunststoff, die Stützscheiben oder Stützbleche (14) aus einem metallischen Werkstoff, und die Dichtelemente (4) aus Elastomeren, Kunststoff oder aus hochtemperaturbeständigen und/oder gegen aggressive Medien beständigen Materialien bestehen.

## Claims

1. Shut-off element (1) with a base body (5) and an opening (6) for receiving a gate valve stem (7) engaged with a threaded insert (8), wherein the base body (5) is positively connected to the threaded insert (8), wherein the base body (5) has a saddle stabilizing the position of the threaded insert (8), wherein the saddle (17) is designed in the form of a shell partially encompassing the circumference of the base body (5), wherein the width (18) of the saddle (17) is greater than or equal to the width (19) of the base body (5),
wherein the threaded insert (8) is cast into the base body (5), or wherein the base body (5) is of multi-part design and the threaded insert (8) is inserted into the base body (5),
**characterized in that**
the threaded insert (8) is fixed in the saddle (17) of the main body (5) by stabilizing elements (25).

2. Shut-off element according to claim 1, **characterized in that** the threaded insert (8) has stabilizing elements which stabilize, which counteract a rotation and/or loosening of the threaded insert (8) and enable a fixed connection of the threaded insert (8) to the base body (5).

3. Shut-off element according to one of claims 1 or 2, **characterized in that** the threaded insert (8) has at least one stabilizing pressure plate (11).

4. Shut-off element according to one of claims 1 to 3, **characterized in that** the threaded insert (8) has at least one transverse rib (22) securing the threaded insert (8) against rotation.

5. Shut-off element according to one of claims 1 to 4, **characterized in that** the threaded insert (8) has circumferential ribs (12) for the fixed connection to the base body (5).

6. Shut-off element according to one of claims 1 to 5, **characterized in that** the threaded insert (8) has an internal thread (9) in an opening (24), which is engaged with an external thread (10) of the gate valve stem (7).

7. Shut-off element according to claim 6, **characterized in that** the threaded insert (8) has a threaded collar (21).

8. Shut-off element according to one of claims 1 to 7, **characterized in that** the base body (5) has reinforcing ribs (13).

9. Shut-off element according to one of claims 1 to 8, **characterized in that** sealing elements (4) are fastened to opposing support surfaces (3) of the base body (5).

10. Shut-off element according to claim 9, **characterized in that** the sealing elements (4) have at least one circumferential edge bead (23).

11. Shut-off element according to claim 9 or 10, **characterized in that** supporting discs or supporting plates (14) are provided for fastening the sealing elements (4) to the base body (5).

12. Shut-off element according to claim 11, **characterized in that** fixing means (26) fixing the sealing elements (4) to the base body (5) are provided on the supporting discs or supporting plates (14) and are designed, for example, as rivets (15), screws, bolts or the like.

13. Shut-off element according to claim 12, **characterized in that** the base body (5), the sealing elements (4) and/or the supporting discs or supporting plates (14) have corresponding recesses (20) for receiving the fixing means (26).

14. Shut-off element according to one of claims 1 to 13, **characterized in that** the base body (5) has guide projections (16) in the form of tabs, springs or the like for the non-rotatable mounting of the shut-off element (1).

15. Shut-off element according to one of claims 1 to 14, **characterized in that** the threaded insert (8) is formed integrally with the base body (5).

16. Shut-off element according to one of the preceding claims, **characterized in that** the threaded insert (8) consists of metal or a ceramic material, the base body (5) consists of plastic, the supporting discs or supporting plates (14) consist of a metallic material, and the sealing elements (4) consist of elastomers, plastic or of materials which are resistant to high temperatures and/or resistant to aggressive media.

## Revendications

1. Elément d'arrêt (1) avec un corps de base (5) et une ouverture (6) pour recevoir une tige de vanne (7) en prise avec un insert fileté (8), dans lequel le corps de base (5) est relié à engagement positif à l'insert fileté (8), dans lequel le corps de base (5) présente une selle stabilisant la position de l'insert fileté (8), dans lequel la selle (17) est conçue sous la forme d'une coque entourant partiellement la circonférence du corps de base (5), dans lequel la largeur (18) de la selle (17) est supérieure ou égale à la largeur (19) du corps de base (5),
dans lequel l'insert fileté (8) est coulé dans le corps de base (5), ou dans lequel le corps de base (5) est réalisé en plusieurs parties et l'insert fileté (8) est inséré dans le corps de base (5),
**caractérisé en ce que**
l'insert fileté (8) est fixé dans la selle (17) du corps de base (5) par des éléments de stabilisation (25).

2. Elément d'arrêt selon la revendication 1, **caractérisé en ce que** l'insert fileté (8) présente des éléments de stabilisation stabilisateurs qui s'opposent à une rotation et/ou à un desserrage de l'insert fileté (8) et permettent une liaison fixe de l'insert fileté (8) avec le corps de base (5).

3. Elément d'arrêt selon l'une des revendications 1 ou 2, **caractérisé en ce que** l'insert fileté (8) dispose d'au moins une plaque de pression (11) stabilisatrice.

4. Elément d'arrêt selon l'une des revendications 1 à 3, **caractérisé en ce que** l'insert fileté (8) présente au moins une nervure transversale (22) qui protège l'insert fileté (8) contra la rotation.

5. Elément d'arrêt selon l'une des revendications 1 à 4, **caractérisé en ce que** l'insert fileté (8) présente des nervures circonférentielles (12) pour une liaison fixe avec le corps de base (5).

6. Elément d'arrêt selon l'une des revendications 1 à 5, **caractérisé en ce que** l'insert fileté (8) présente un filetage intérieur (9) dans une ouverture (24), qui est en prise avec un filetage extérieur (10) de la tige de vanne (7).

7. Elément d'arrêt selon la revendication 6, **caractérisé en ce que** l'insert fileté (8) dispose d'une collerette filetée (21).

8. Elément d'arrêt selon l'une des revendications 1 à 7, **caractérisé en ce que** le corps de base (5) dispose des nervures de renforcement (13).

9. Elément d'arrêt selon l'une des revendications 1 à 8, **caractérisé en ce que** des éléments d'étanchéité (4) sont fixés sur des surfaces d'appui (3) opposées du corps de base (5).

10. Elément d'arrêt selon la revendication 9, **caractérisé en ce que** les éléments d'étanchéité (4) présentent au moins un bourrelet de bordure (23) périphérique.

11. Elément d'arrêt selon la revendication 9 ou 10, **caractérisé en ce que** des disques de support ou des tôles de support (14) sont prévus pour la fixation des éléments d'étanchéité (4) au corps de base (5).

12. Elément d'arrêt selon la revendication 11, **caractérisé en ce que** des moyens de fixation (26) fixant les éléments d'étanchéité (4) au corps de base (5) sont prévus sur les disques de support ou les tôles de support (14) et sont conçus, par exemple, sous forme de rivets (15), de vis, de boulons ou similaires.

13. Elément d'arrêt selon la revendication 12, **caractérisé en ce que** le corps de base (5), les éléments d'étanchéité (4) et/ou les disques de support ou tôles de support (14) présentent des évidements (20) correspondants pour recevoir les moyens de fixation (26).

14. Elément d'arrêt selon l'une des revendications 1 à 13, **caractérisé en ce que** le corps de base (5) présente des prolongements de guidage (16) sous forme de languettes, de ressorts ou similaires pour le logement résistant à la rotation de l'élément d'arrêt (1).

15. Elément d'arrêt selon l'une des revendications 1 à 14, **caractérisé en ce que** l'insert fileté (8) est réalisé d'une seule pièce avec le corps de base (5).

16. Elément d'arrêt selon l'une des revendications précédentes, **caractérisé en ce que** l'insert fileté (8) est en métal ou en céramique, le corps de base (5) est en matière plastique, les disques de support ou tôles de support (14) sont en matériau métallique et les éléments d'étanchéité (4) sont en élastomères, en matière plastique ou en matériaux résistant aux hautes températures et/ou aux milieux agressifs.
